# EUROPÄISCHE PATENTANMELDUNG

(11) **EP 1 464 769 A1**
(43) Veröffentlichungstag der Anmeldung: **06.10.2004**
(21) Anmeldenummer: 04015454.4
(22) Anmeldetag: 09.08.2002
(51) Int. Cl.: E04B 1/76, E04D 13/03, A01G 9/24, E06B 3/28, E06B 9/24, F24J 2/40, C03C 17/25, C03C 17/00, G02B 1/11

(54) **Verwendung eines Sicherheitsglases in einem Fensterelement eines Gewächshauses und Fensterelement mit einem derartigen Sicherheitsglas**

(30) Priorität: 11.08.2001 DE 10138376
(62) Teilanmeldung aus: 02794594.8
(71) Anmelder: Flabeg Solarglas GmbH & Co. KG, 90766 Fürth (DE)
(72) Erfinder: Reisinger, Gerhard, 89257 Illertissen (DE); Hofmann, Thomas, 90763 Fürth (DE)
(74) Vertreter: Walkenhorst, Andreas

(57) **Zusammenfassung**

Ein Fensterelement (2), das für einen Einsatz in einem Gewächshaus (1) besonders geeignet ist. Dazu umfasst das Fensterelement (2) erfindungsgemäß ein mit einer Antireflex-Beschichtung versehenes Sicherheitsglas.

## Beschreibung

Die Erfindung bezieht sich auf die Verwendung eines Sicherheitsglases in einem Fensterelement eines Gewächshauses. Sie betrifft weiterhin ein Fensterelement mit einem derartigen Sicherheitsglas und ein Gewächshaus mit einer Anzahl derartiger Fensterelemente.

Gewächshäuser sind üblicherweise mit einer Anzahl von so genannten Eindeckfenstern versehen, die als Dach- oder Seitenwandfenster eingesetzt sind und in ihrer Gesamtheit die Außenhülle oder Hüllfläche des Gewächshauses bilden.

Der Erfindung liegt die Aufgabe zugrunde, ein zum Einsatz in einem Eindeckfenster eines Gewächshauses besonders geeignetes Fensterelement anzugeben.

Diese Aufgabe wird erfindungsgemäß gelöst, indem das Fensterelement ein mit einer Antireflex-Beschichtung versehenes Sicherheitsglas umfasst.

Die Erfindung geht dabei von der Überlegung aus, dass bei einem Einsatz in einem Gewächshaus die Transparenz des Eindeckfensters insgesamt, also dessen erreichbare Lichtdurchlässigkeit, von besonderer Bedeutung ist. Gerade die Produktivität bei einer Pflanzenzüchtung in einem Gewächshaus hängt nämlich in entscheidendem Maße von einer ausreichenden Bereitstellung von Tageslicht ab, so dass üblicherweise eine hohe Lichtdurchlässigkeit in diesem Fall besonders gewünscht ist. Um dies in besonderem Maße zu begünstigen, ist die Grundplatte des Eindeckfensters in besonders vorteilhafter Weiterbildung für eine besonders hohe Transparenz oder Lichtdurchlässigkeit ausgestaltet. Dazu weist die als Glasplatte ausgeführte Grundplatte vorteilhafterweise eine Antireflex-Beschichtung, vorzugsweise in Form einer porösen SiO₂-Schicht, auf. Die Glasplatte des Eindeckfensters ist somit in besonders vorteilhafter Ausgestaltung in der Art eines antireflex-beschichteten Glases ausgeführt, wie es beispielsweise in der WO 02/32823 A1 oder in der nicht vorveröffentlichten deutschen Patentanmeldung Nr. 101 46 687 beschrieben ist. Die Offenbarung dieser Anmeldungen wird ausdrücklich in die vorliegende Offenbarung mit einbezogen.

Vorteilhafterweise ist die SiO₂-Schicht für eine Brechzahl im Bereich von 1,25 bis 1,40, vorzugsweise von 1,25 bis 1,38, ausgelegt. Vorzugsweise ist die Glasplatte dabei aus thermisch gehärtetem, mit einer porösen SiO₂-Schicht versehenem Sicherheitsglas ausgeführt, wobei das Sicherheitsglas insbesondere erhältlich ist durch Beschichten eines üblichen Kalk-Natron-Glases mit einer wässrigen Beschichtungslösung mit einem pH-Wert von 3 bis 8, insbesondere 5 bis 8, enthaltend 0,5 Gew% bis 5,0 Gew% [SiOₓ(OH)_{y}]ₙ-Partikeln, wobei 0<y< 4 und 0<x<2 ist, mit einer Partikelgröße von 10 nm bis 60 nm und ein Tensidgemisch, Trocknen des beschichteten Glases, thermisches Härten durch Erhitzen auf Temperaturen von mindestens 600°C für einige Minuten und Abschrecken des beschichteten Glases durch Abblasen mit Luft.

Alternativ kann die SiO₂-Schicht erhalten sein durch Abscheiden eines Hybridsols umfassend [SiOₓ(OH)_{y}]ₙ-Partikel, wobei 0<y<4 und 0<x<2 ist, die aus einem Gemisch aus einer ersten Fraktion von Partikeln mit einer mittleren Teilchengröße von 4 bis 15 nm und einer zweiten Fraktion von Partikeln mit einer mittleren Teilchengröße von 20 bis 60 nm bestehen, und umfassend Wasser und ein Lösemittel, erhältlich durch hydrolythische Polykondensation von Tetraalkoxysilanen in einem wässrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20%.

Wie in den genannten Dokumenten beschrieben, weisen die jeweiligen antireflex-beschichteten Gläser eine besonders hohe Transmission auf, die gerade beim Einsatz in einem Gewächshaus eine besonders hohe Lichtausbeute ermöglicht. Bei der Verwendung in einem Gewächshaus ist aufgrund des erhöhten Lichtangebots somit ein erhöhtes Pflanzenwachstum erreichbar, was sich günstig auf den produkt-spezifischen Energiebedarf auswirkt.

Wie sich überraschenderweise aber auch herausgestellt hat, führt die Beschichtung eines Glases mit einer derartigen Schicht zu hydrophilen Eigenschaften des Glases auf der beschichteten Seite. Infolge dessen tritt bei einem derartig beschichteten Glas bei sich niederschlagender Feuchtigkeit statt einer Tropfenbildung vermehrt eine Benetzung der Glasoberfläche auf. Gerade für eine Anwendung in einem Gewächshaus ist dies besonders günstig, da bei auftretender Tropfenbildung an Dachfenstern eine unerwünschte Befeuchtung darunter liegender Pflanzen auftreten könnte. Durch die Verwendung der Eindeckfenster als Dachfenster in einem Gewächshaus ist somit bei sich niederschlagender Feuchtigkeit eine großflächige Benetzung der Fensterfläche erreichbar, so dass die sich niederschlagende Feuchtigkeit an der Fensterfläche entlang geführt und anschließend kontrolliert abgeführt werden kann. Damit wird zudem vermieden, dass die Lichttransmission infolge der Tropfenbildung durch Lichtstreuung beeinträchtigt wird. Um dies in besonders günstiger Weise auszunutzen, weist die SiO₂-Beschichtung dabei vorzugsweise in den Innenraum des Gewächshauses, so dass sich dort niederschlagende Feuchtigkeit besonders zuverlässig und kontrolliert abführen lässt. Darüber hinaus kann die Glasplatte des Eindeckfensters selbstverständlich auch beidseitig mit einer derartigen SiO₂-Beschichtung versehen sein, so dass der insgesamt erreichbare Transmissionsgrad besonders hoch ist.

Vorzugsweise ist das Eindeckfenster in einem Gewächshaus eingesetzt, wobei das Gewächshaus mit einer Anzahl von Dach- oder Seitenwände bildenden Fensterelementen ausgestattet ist, von denen zumindest eines als derartiges Eindeckfenster ausgestaltet ist.

Vorteilhafterweise wird ein thermisch vorgespanntes, mit einer porösen SiO₂-Schicht versehenes Sicherheitsglas, bei dem die SiO₂-Schicht erhalten ist, durch Abscheiden eines Hybridsols, umfassend [SiOₓ(OH)_{y}]ₙ Partikel, wobei 0<y<4 und 0<x<2 ist, die aus einem Gemisch aus einer ersten Fraktion von Partikeln mit einer mittleren Teilchengröße von 4 bis 15 nm und einer zweiten Fraktion von Partikeln mit einer mittleren Teilchengröße von 20 bis 60 nm bestehen, und umfassend Wasser und ein Lösemittel, erhältlich durch hydrolythische Polykondensation von Tetraalkoxysilanen in einem wässrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20%, in einem Fensterelement eines Gewächshauses verwendet.

Ein Ausführungsbeispiel der Erfindung wird anhand einer Zeichnung näher erläutert. Darin zeigen:
- Fig. 1: schematisch ein Gewächshaus mit einer Anzahl von Fensterelementen,
- Fig. 2-7: jeweils ein Eindeckfenster im Querschnitt, und
- Fig. 8: die Grundplatte eines Eindeckfensters nach einer der Fig. 2-7 im Querschnitt.

Gleiche Teile sind in allen Figuren mit denselben Bezugszeichen versehen.

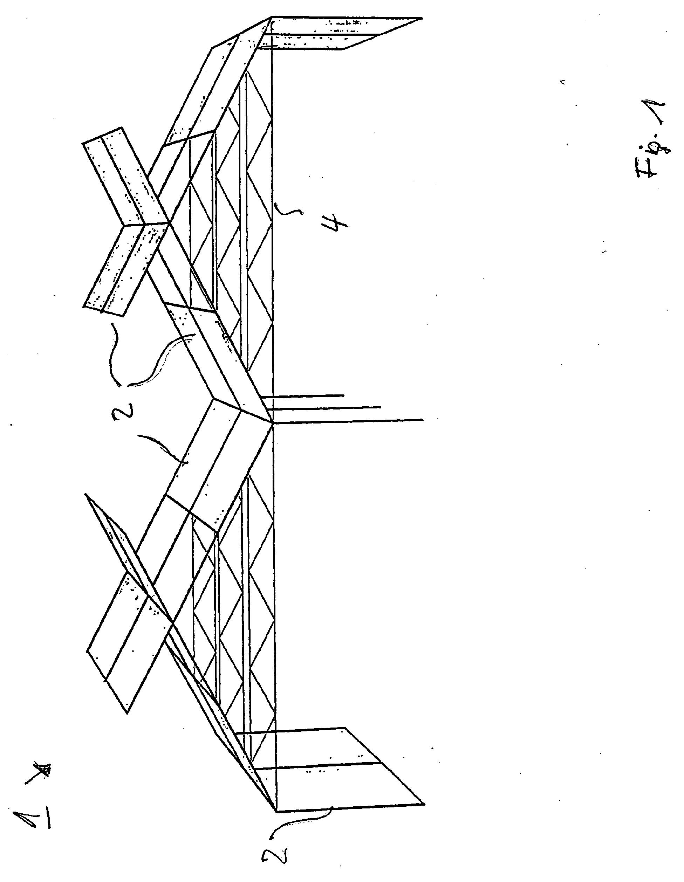

Das Gewächshaus 1 nach Fig. 1 umfasst eine Anzahl von Dach- oder Seitenwände bildenden Fensterelementen 2, die in ihrer Gesamtheit die Außenwand des Gewächshauses 1 bilden, und die je nach Einsatzzweck feststehend oder klappbar ausgebildet sein können. Die Fensterelemente 2 sind zur mechanischen Stabilisierung von einem Gerüstrahmen 4 gehalten; alternativ können die Fensterelemente 2 aber auch in der Art einer selbsttragenden Ausführung unter Verzicht auf einen eigenständigen Rohrrahmen ausgeführt sein.

Gerade von Eindeckmaterialien für Gewächshäuser wird meist eine möglichst hohe Transparenz erwartet. Darüberhinaus kann bei Gewächshäusern eine hohe Wärmedämmung der Fensterelemente üblicherweise bei Nacht und bei tiefen Außentemperaturen am Tag vorteilhaft sein. Bei schwacher solarer Einstrahlung in den Morgen- und Abendstunden ist hingegen eine vergleichsweise hohe Transparenz gefordert, wobei die Wärmedämmung eine eher untergeordnete Rolle spielt. In dem Fall, dass Schnee auf dem Gewächshausdach zu liegen kommt, ist ein möglichst schnelles Abtauen wünschenswert. Dies kann bei geeigneter Beheizung des Innenraums des Gewächshauses 1 erreicht werden, indem die Fensterelemente 2 gerade eine vergleichsweise geringe Wärmedämmung aufweisen.

Um diesen wechselnden Anforderungen gerecht werden zu können, sind die Fensterelemente 2 des Gewächshauses 1 als Eindeckfenster ausgestaltet, die jeweils als Wärmedämmelement 6 mit extern einstellbarem Wärmeübertragungskoeffizient ausgeführt sind.

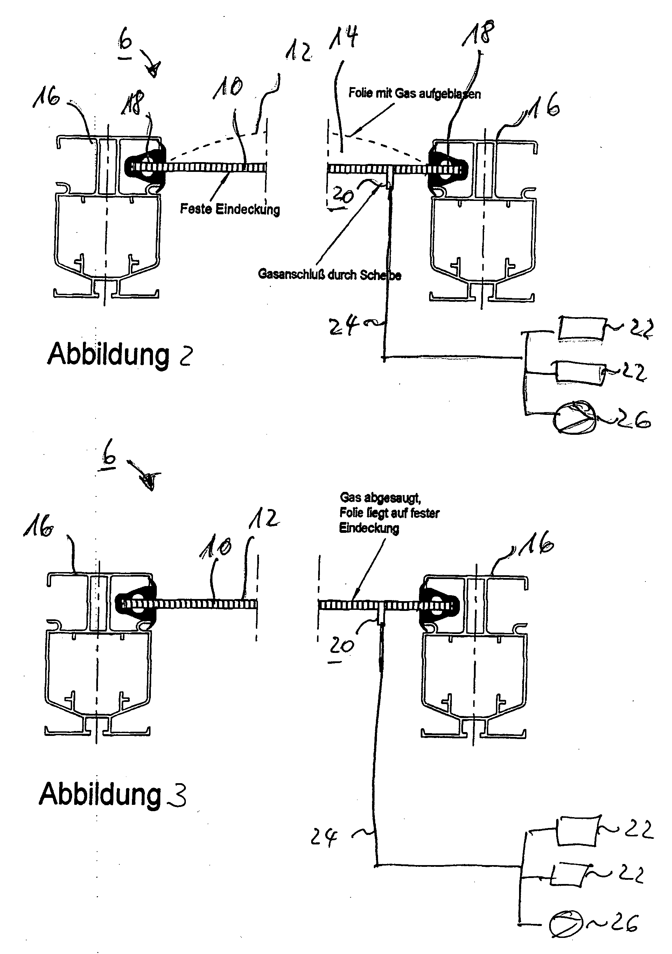

Dazu weist das das jeweilige Eindeckfenster bildende Wärmedämmelement 6, wie in den Fig. 2 bis 7 dargestellt, jeweils eine vergleichsweise starre Grundplatte 10 auf, die mit einer zugeordneten Abdeckhülle 12 überspannt ist. Hinsichtlich der Materialwahl für die Grundplatte 10 und die Abdeckhülle 12 ist dabei im Ausführungsbeispiel berücksichtigt, dass eine Anwendung als Eindeckfenster vorgesehen ist. Die Grundplatte 10 und die Abdeckhülle 12 sind somit hinsichtlich einer geeignet hohen Transparenz geeignet gewählt. Bei einem Einsatz ohne Erfordernis einer derartigen optischen Transparenz können aber auch andere Materialien zum Einsatz kommen.

Für eine bedarfsgerechte Anpassung an variierende Erfordernisse ist das Wärmedämmelement 6 für eine gezielte Beeinflussung der Wärmeübertragungseigenschaften ausgelegt. Um dies zu ermöglichen, ist die Abdeckhülle 12 hinsichtlich ihrer mechanischen Flexibilität derart ausgewählt, dass das von der Grundplatte 10 und der Abdeckhülle 12 begrenzte, mit einem Gasdruck beaufschlagbare Innenvolumen 14 durch den Gasdruck veränderbar ist. Die Grundplatte 10 ist dabei hinreichend starr gewählt, so dass sie in der Art einer selbsttragenden Konstruktion sämtliche auftretenden Spannkräfte aufnehmen kann. Im Gegensatz zur Grundplatte 10 ist die Abdeckhülle 12 jedoch vergleichsweise flexibel oder mit entsprechend anders gewählter Biegesteifigkeit, insbesondere als Deckfolie ausgewählt, so dass bei sich änderndem Gasdruck im Innenvolumen 14 eine entsprechende Verformung der Abdeckhülle 12 und damit eine entsprechende Veränderung des Innenvolumens 14 und eine entsprechende Veränderung des lokalen Abstands der Abdeckhülle 12 von der Grundplatte 10 erreichbar ist. Um dies zu verdeutlichen, ist eine Ausführungsform des als Eindeckfenster vorgesehenen Wärmedämmelements 6 in den Fig. 2 und 3 in zwei verschiedenen Betriebszuständen gezeigt.

Im Betriebszustand nach Fig. 2 ist das Wärmedämmelement 6 für eine vergleichsweise hohe Wärmeisolierung angesteuert. Dazu ist das Innenvolumen 14 mit vergleichsweise hohem Gasdruck beaufschlagt, so dass sich aufgrund der vergleichsweise flexiblen mechanischen Eigenschaften der Abdeckhülle 12 ein vergleichsweise großes Innenvolumen 14 und somit ein vergleichsweise großer durchschnittlicher Abstand der Abdeckhülle 12 von der Grundplatte 10 einstellt. Das Innenvolumen 14 trägt in diesem Zustand vergleichsweise viel zu einer Wärmeisolationswirkung bei, so dass eine hohe Wärmedämmung gewährleistet ist. Wie der Darstellung nach Fig. 2 im Übrigen entnehmbar ist, sind die Grundplatte 10 und die Abdeckhülle 12 in einem gemeinsamen Halterahmen 16 gehaltert, innerhalb dessen sie in einem Randbereich 18 gasdicht miteinander verschweißt sind.

Im anderen Betriebszustand - wie in Fig. 3 gezeigt - ist der Innenraum 14 vollständig entlüftet oder sogar mit Unterdruck beaufschlagt. Dadurch liegt in diesem Betriebszustand die vergleichsweise flexible Abdeckhülle 12 nahezu vollständig und flächig an der Grundplatte 10 an, so dass das Innenvolumen 14 im Wesentlichen vollständig verschwindet. Das Innenvolumen 14 trägt in diesem Betriebszustand somit nichts zur Wärmeisolierung bei, so dass das Wärmedämmelement 6 in diesem Betriebszustand nur vergleichsweise geringe Wärmedämmung aufweist.

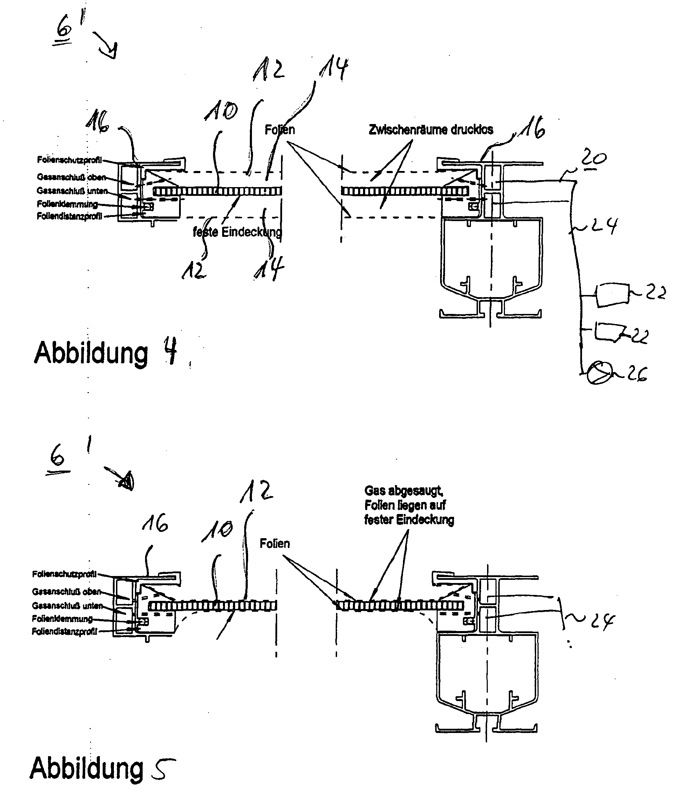

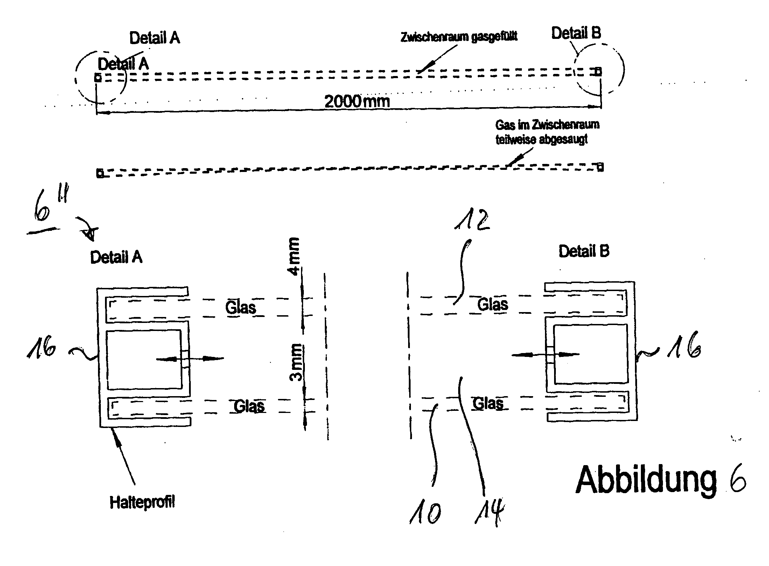

Im Ausführungsbeispiel nach den Fig. 4 und 5 ist eine alternative Ausführungsform des Wärmedämmelements 6' ebenfalls in zwei Betriebszuständen gezeigt. In dieser Ausführungsform umfasst das Wärmedämmelement 6' die vergleichsweise starre Grundplatte 10 und beidseitig jeweils eine darüber gespannte Abdeckhülle 12, die in dieser Ausführungsform jeweils als Deckfolie ausgestaltet ist. In dieser Ausführungsform sind die Grundplatte 10 und die Abdeckhüllen 12 ebenfalls in einem gemeinsamen umlaufenden Halterahmen 16 angeordnet, wobei in diesem Fall die Grundplatte 10 und die Abdeckhüllen 12 jedoch nicht in ihren Randbereichen unmittelbar miteinander verschweißt sind. Vielmehr ist in diese Ausführungsform eine gasdichte Verbindung zwischen den Abdeckhüllen 12 und der Grundplatte 10 durch Vermittlung über den Halterahmen 16 hergestellt, wobei die Abdeckhüllen 12 in den Halterahmen 16 mechanisch eingespannt sind. Dadurch stellt sich im drucklosen Zustand eine annähernd gleichbleibende Beabstandung der Abdeckhüllen 12 von der Grundplatte 10 ein, wie dies in Fig. 4 gezeigt ist. In diesem Zustand tragen somit die Innenvolumina 14 zwischen den Abdeckhüllen 12 und der Grundplatte 10 zur Wärmeisolierung bei.

Um eine Umschaltung zu einem Betriebszustand mit geringerer Wärmeisolierung zu ermöglichen, kann bei dieser Ausführungsform das jeweilige Innenvolumen 14 durch Beaufschlagung mit einem Unterdruck verringert werden, bis im Extremfall infolge des aufgebrachten Unterdrucks die Abdeckhüllen 12 infolge ihrer vergleichsweise hohen mechanischen Flexibilität nahezu vollständig an der Grundplatte 10 anliegen. In diesem Betriebszustand tragen die Innenvolumina 14 somit ebenfalls nicht mehr zur Wärmeisolierung bei, so dass eine deutlich geringere Wärmedämmungswirkung erreichbar ist.

In Fig. 6 ist eine weitere alternative Ausführungsform für ein Wärmedämmelement 6" gezeigt, bei der im Gegensatz zu den bisherigen Ausführungsformen zusätzlich zu der Grundplatte 10 eine in ihren mechanischen Eigenschaften zu dieser annähernd vergleichbare Abdeckhülle 12 vorgesehen ist. In diesem Ausführungsbeispiel sind sowohl die Grundplatte 10 als auch die Abdeckhülle 12 jeweils als flächige Glasplatte ausgeführt. In dieser Ausführungsform sind die Grundplatte 10 und die Abdeckhülle 12 hinsichtlich ihrer Dimensionierung, insbesondere hinsichtlich ihrer Dicke, im Hinblick auf ihre laterale Ausdehnung derart gewählt, dass eine ausreichende Verformbarkeit in Reaktion auf eine Variation des Gasdrucks im Innenvolumen 14 gewährleistet ist. Die Grundplatte 10 und die Abdeckhülle 12 sind in dieser Ausführungsform ebenfalls in einem gemeinsamen Halterahmen 16 gehaltert.

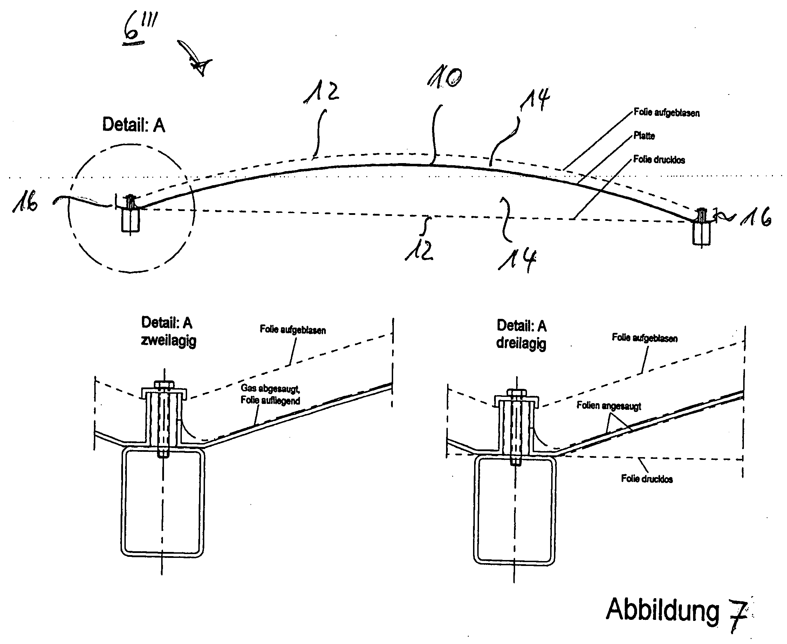

Je nach vorgesehenem Einsatzzweck kann das als Eindeckfenster vorgesehene Wärmedämmelement 6,6',6" im Wesentlichen planar oder auch gekrümmt, insbesondere sphärisch gekrümmt, ausgeführt sein. Ein Ausführungsbeispiel hierzu ist in Fig. 7 dargestellt. Bei dieser Ausführungsform des Wärmedämmelements 6''' ist die Grundplatte 10 sphärisch gekrümmt ausgeführt. Auf ihrer gemäß der Darstellung nach Fig. 7 oberen Seite ist die Grundplatte 10 von einer im Ausführungsbeispiel als vergleichsweise flexible Folie ausgebildeten Abdeckhülle 12 überspannt, die mit der Grundplatte 10 in einem gemeinsamen Halterahmen 16 gehaltert ist. Die Einhaltung eines ausreichenden Abstands zwischen der Abdeckhülle 12 und der Grundplatte 10 - wie in der Fig. 7 gezeigt - erfolgt in diesem Betriebszustand durch eine geeignete Beaufschlagung des Innenvolumens 14 mit ausreichend hohem Gasdruck. Zusätzlich ist die Grundplatte 10 auf ihrer im Ausführungsbeispiel gesehenen unteren Seite von einer weiteren Abdeckhülle 12 überspannt, die aufgrund ihrer seitlichen Verspannung im Halterahmen 16 im im Ausführungsbeispiel gezeigten drucklosen Zustand annähernd planar verläuft. Auch bei dieser Ausführungsform können beide Abdeckhüllen 12 in ihrer relativen Positionierung zur Grundplatte 10 durch eine geeignete Veränderung des Gasdrucks im ihnen zugeordneten Innenvolumen 14 bedarfsgerecht variiert werden.

Zur geeigneten Variation des Gasdrucks in den Innenvolumina 14 ist dieses in sämtlichen vorgenannten Ausführungsformen über ein Gasleitungssystem 20, das insbesondere durch die Grundplatte 10 hindurch geführt sein kann, mit einer Anzahl von Druckgasspeichern 22 verbunden. Die Druckgasspeicher 22 sind dazu an eine absperrbare Gasleitung 24 des Gasleitungssystems 20 angeschlossen, an die zudem auch noch eine Unterdruckpumpe 26 angeschlossen ist. In den Druckgasspeichern 22 sind dabei verschiedenartige Druckgase vorgehalten, mit denen das jeweilige Innenvolumen 14 bedarfsweise beaufschlagt werden kann. Die Druckgase sind dabei insbesondere hinsichtlich weiterer Eigenschaften, wie beispielsweise ihrem Einfluss auf optische Eigenschaften oder ihre Wärmeleitfähigkeiten, ausgewählt. Als Druckgas ist beispielsweise Kohlendioxid vorgehalten, das bedarfsweise in das jeweilige Innenvolumen 14 eingespeist werden kann, um die Wämeleitfähigkeit des als Eindeckfenster vorgesehenen jeweiligen Wärmedämmelements 6,6',6'',6''' vorübergehend zu verändern.

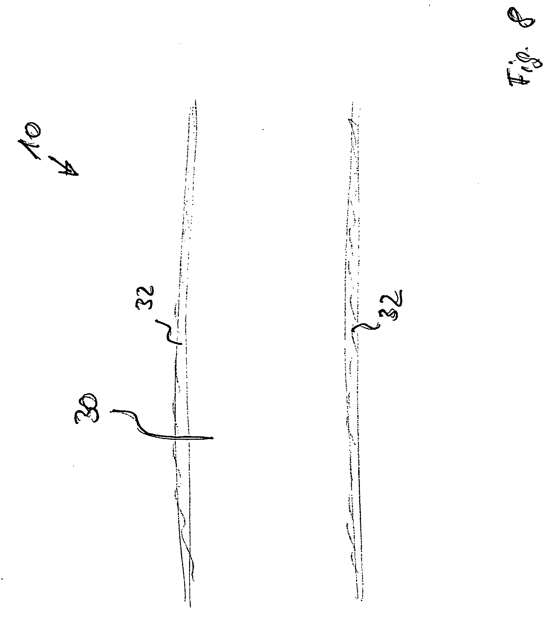

Im Hinblick auf den vorgesehenen Einsatz in einem Gewächshaus ist das Wärmedämmelement 6,6',6'',6''' für eine insgesamt besonders hohe Transparenz ausgelegt, die eine besonders hohe Tageslichtausbeute im Inneren des Gewächshauses 1 und somit einen besonders geringen produkt-spezifischen Energiebedarf bei der Pflanzenkultivierung ermöglicht. Dazu ist die Grundplatte 10 des Wärmedämmelements 6,6',6'',6''' als antireflex-beschichtete Glasplatte ausgeführt, wie dies im Ausschnitt in Fig. 8 dargestellt ist. Die Grundplatte 10 ist dabei auf der Grundlage einer üblichen Kalk-Natron-Glasplatte 30 aufgebaut, die beidseitig mit einer porösen SiO₂-Schicht versehen ist. Die Grundplatte 10 ist dabei als thermisch gehärtetes Sicherheitsglas ausgeführt. Die SiO₂-Schichten 32 weisen zur Einstellung einer besonders hohen Transparenz eine Brechzahl von etwa 1,25 auf. Zur Herstellung eines derartig beschichteten Sicherheitsglases wird auf die WO 02/32823 A1 und auf die nicht vorveröffentlichte deutsche Patentanmeldung Nr. 101 46 687 verwiesen, deren Offenbarungsgehalte ausdrücklich mit einbezogen werden.

### Bezugszeichenliste

- 1: Gewächshaus
- 2: Fensterelement
- 4: Gerüstrahmen
- 6,6',6'',6''': Wärmedämmelement
- 10: Grundplatte
- 12: Abdeckhülle
- 14: Innenvolumen
- 16: Halterahmen
- 20: Gasleitungssystem
- 22: Druckgasspeicher
- 24: Gasleitung
- 26: Unterdruckpumpe
- 30: Kalk-Natron-Glasplatte
- 32: SiO₂-Schicht

## Patentansprüche

1. Verwendung eines mit einer Antireflex-Beschichtung versehenen Sicherheitsglases in einem Fensterelement (2) eines Gewächshauses (1).

2. Verwendung eines mit einer porösen SiO₂-Schicht (32) versehenen Sicherheitsglases in einem Fensterelement (2) eines Gewächshauses (1).

3. Verwendung eines thermisch vorgespannten, mit einer porösen SiO₂-Schicht (32) versehenen Sicherheitsglases, bei dem die SiO₂-Schicht (32) erhalten ist durch Abscheiden eines Hybridsols, umfassend [SiOₓ(OH)_{y}]ₙ-Partikel, wobei 0<y<4 und 0<x<2 ist, die aus einem Gemisch aus einer ersten Fraktion von Partikeln mit einer mittleren Teilchengröße von 4 bis 15 nm und einer zweiter Fraktion von Partikeln mit einer mittleren Teilchengröße von 20 bis 60 nm bestehen, und umfassend Wasser und ein Lösemittel, erhältlich durch hydrolytische Polykondensation von Tetraalkoxysilanen in einem wässrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20%, in einem Fensterelement (2) eines Gewächshauses (1).

4. Fensterelement (2) eines Gewächshauses (1) mit einem mit einer Antireflex-Beschichtung versehenen Sicherheitsglas.

5. Fensterelement (2) eines Gewächshauses (1) mit einem mit einer porösen SiO₂-Schicht (32) versehenen Sicherheitsglas.

6. Fensterelement (2) eines Gewächshauses (1) mit einem thermisch vorgespannten, mit einer porösen SiO₂-Schicht (32) versehenen Sicherheitsglas, bei dem die SiO₂-Schicht (32) erhalten ist durch Abscheiden eines Hybridsols, umfassend [Si-Oₓ(OH)_{y}]ₙ-Partikel, wobei 0<y<4 und 0<x<2 ist, die aus einem Gemisch aus einer ersten Fraktion von Partikeln mit einer mittleren Teilchengröße von 4 bis 15 nm und einer zweiter Fraktion von Partikeln mit einer mittleren Teilchengröße von 20 bis 60 nm bestehen, und umfassend Wasser und ein Lösemittel, erhältlich durch hydrolytische Polykondensation von Tetraalkoxysilanen in einem wässrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20%.

7. Gewächshaus (1) mit einer Anzahl von Fensterelementen (2) nach einem der Ansprüche 4 bis 6.
